# EUROPÄISCHE PATENTSCHRIFT

(11) **EP 3 316 466 B1**
(45) Veröffentlichungstag und Bekanntmachung des Hinweises auf die Patenterteilung: **20.01.2021**
(21) Anmeldenummer: 16196319.4
(22) Anmeldetag: 28.10.2016
(51) Int. Cl.: H02M 3/158, H02M 7/483, H02M 7/797

(54) **GLEICHSPANNUNGSWANDLER UND ANLAGE ZUM ÜBERTRAGEN ELEKTRISCHER LEISTUNG**
DC CONVERTER AND DEVICE FOR TRANSMITTING ELECTRIC POWER
CONVERTISSEUR CONTINU-CONTINU ET INSTALLATION DE TRANSFERT D'ÉNERGIE ÉLECTRIQUE

(43) Veröffentlichungstag der Anmeldung: 02.05.2018
(73) Patentinhaber: Siemens Aktiengesellschaft, 80333 München (DE)
(72) Erfinder: Schettler, Frank, 91058 Erlangen (DE); Schön, Andre, 91096 Möhrendorf (DE)

(56) Entgegenhaltungen:
- WO-A1-2014/056540
- WO-A1-2015/007302
- SCHÖN, ANDRÉ ET AL: "Comparison of the most efficient DC-DC converters for power conversion in HVDC grids", PCIM Europe 2015, Nuremberg, Germany, 6. Juli 2015 (2015-07-06), Seiten 518-526, XP055368833, Berlin ISBN: 978-3-8007-3924-0 Gefunden im Internet: URL:http://ieeexplore.ieee.org/ielx7/71488 16/7148817/07149072.pdf?tp=&arnumber=71490 72&isnumber=7148817 [gefunden am 2017-05-03]
- SCHÖN, ANDRÉ ET AL: "Average loss calculation and efficiency of the new HVDC auto transformer", 2014 16TH EUROPEAN CONFERENCE ON POWER ELECTRONICS AND APPLICATIONS, IEEE, 26. August 2014 (2014-08-26), Seiten 1-10, XP032651238, DOI: 10.1109/EPE.2014.6910725 [gefunden am 2014-09-25]

## Beschreibung

Die Erfindung betrifft einen Gleichspannungswandler mit einem ersten Teilumrichter, der wenigstens eine erste Umrichterphase aufweist, wobei die erste Umrichterphase des ersten Teilumrichters einen ersten Phasenzweig und einen zweiten Phasenzweig umfasst, wobei der erste Phasenzweig des ersten Teilumrichters sich zwischen einem ersten primärseitigen Gleichspannungspol und einem ersten Wechselspannungsanschluss des ersten Teilumrichters erstreckt, und der zweite Phasenzweig des ersten Teilumrichters sich zwischen dem ersten Wechselspannungsanschluss des ersten Teilumrichters und einem ersten sekundärseitigen Gleichspannungspol erstreckt, und einem zweiten Teilumrichter, der wenigstens eine erste Umrichterphase aufweist, wobei die erste Umrichterphase des zweiten Teilumrichters einen ersten Phasenzweig und einen zweiten Phasenzweig umfasst, wobei der erste Phasenzweig des zweiten Teilumrichters sich zwischen dem ersten sekundärseitigen Gleichspannungspol und einem ersten Wechselspannungsanschluss des zweiten Teilumrichters erstreckt, und der zweite Phasenzweig des zweiten Teilumrichters sich zwischen dem ersten Wechselspannungsanschluss des zweiten Teilumrichters und einem zweiten sekundärseitigen Gleichspannungspol erstreckt, wobei die beiden Teilumrichter miteinander in Reihe geschaltet sind und zumindest einen Teil einer Umrichterreihenschaltung ausbilden, die sich zwischen dem ersten und einem zweiten primärseitigen Gleichspannungspol erstreckt, wobei die Phasenzweige der Teilumrichter jeweils eine Reihenschaltung zweipoliger Submodule aufweisen, die jeweils wenigstens zwei Leistungshalbleiterschalter und einen Energiespeicher umfassen, und der erste Wechselspannungsanschluss des ersten Teilumrichters und der erste Wechselspannungsanschluss des zweiten Teilumrichters über eine Kopplungseinrichtung miteinander verbunden sind, so dass ein Austausch elektrischer Leistung zwischen dem ersten und dem zweiten Teilumrichter ermöglicht ist.

Ein solcher Gleichspannungswandler ist aus der WO 2014/056540 A1 bekannt. Die primärseitigen Gleichspannungspole des Gleichspannungswandlers umfassen einen primärseitigen Gleichspannungsanschluss zum Verbinden mit einem primärseitigen Gleichspanungsnetz. Zugleich umfassen die sekundärseitigen Gleichspannungspole des Gleichspannungswandlers einen sekundärseitigen Gleichspannungsanschluss zum Verbinden mit einem sekundärseitigen Gleichspannungsnetz. Die Spannungsfestigkeit der Umrichterreihenschaltung größer als die Spannungsfestigkeit eines der beiden Teilumrichter ist, kann das primärseitiges Gleichspannungsnetz eine Betriebsspannung aufweisen, die größer als die Betriebsspannung des sekundärseitigen Gleichspannungsnetzes ist. Der primärseitige Gleichspannungsanschluss kann daher als Oberspannungsseite und der sekundärseitige Gleichspannungsaschluss als Unterspannungsseite bezeichnet werden. Die Kopplungseinrichtung ist dazu eingerichtet, eine am ersten Teilumrichter anfallende überschüssige Leistung an den zweiten Teilumrichter zu übertragen.

Die Aufgabe der Erfindung ist es, einen artgemäßen Gleichspannungswandler vorzuschlagen, der einen möglichst breiten Anwendungsbereich erlaubt.

Die Aufgabe wird bei einem artgemäßen Gleichspannungswandler erfindungsgemäß dadurch gelöst, dass die Teilumrichter auf eine Bereitstellung einer konstanten primärseitigen Ausgangsspannung bei einer variablen sekundärseitigen Ausgangsspannung ausgelegt sind.

Die Auslegung des Gleichspannungswandlers ist demnach derart gewählt, dass auch bei einer nahezu beliebigen Absenkung der sekundärseitigen Betriebsspannung eine konstante primärseitige Betriebsspannung eingestellt werden kann.

Ein Vorteil der vorliegenden Erfindung liegt in der Möglichkeit, den erfindungsgemäßen Gleichspannungswandler auch dort einzusetzen, wo eine Absenkung der sekundärseitigen Gleichspannung zu erwarten ist. Ein Beispiel hierfür ist die Leistungsübertragung aus einem auf See ("offshore") angeordneten Windpark mittels einer Gleichspannungsverbindung über einen landseitigen Umrichter in ein landseitiges Versorgungsnetz. Wird die offshore erzeugte Leistung nicht am Ort des landseitigen Umrichters benötigt, ist oftmals ein Weitertransport der Leistung mittels einer Hochspannungsgleichstromübertragungsleitung sinnvoll. Zur Anpassung der seeseitigen Gleichspannung an die landseitige Hochspannungsgleichstromübertragungsleitung kann der erfindungsgemäße Gleichspannungswandler eingesetzt werden. Wird dabei die seeseitige Gleichspannung durch eine Reihenschaltung mehrerer ungeregelter Gleichrichter erzeugt, so kann der erfindungsgemäße Gleichspannungswandler auch einen Ausfall eines der Gleichrichter kompensieren. Ein solcher Ausfall kann beispielsweise aufgrund einer Flaute im Windpark, von Wartungsarbeiten beziehungsweise technischen Problemen oder durch eine entsprechende Verringerung der sekundärseitigen Klemmspannung, d.h. der Spannung an den sekundärseitigen Gleichspannungspolen, auftreten.

Gemäß der Erfindung sind die Anzahl der Submodule im ersten und zweiten Phasenzweig des ersten Teilumrichters und die Anzahl der Submodule im ersten und zweiten Phasenzweig des zweiten Teilumrichters derart bemessen, dass die konstante primärseitige Ausgangsspannung unabhängig von der sekundärseitigen Ausgangsspannung bereitstellbar ist. Die Auslegung des Gleichspannungswandlers wird hierbei also durch eine geeignete Verschaltung einer vorbestimmten Anzahl der Submodule erreicht. Dabei kann die folgende rechnerische Überlegung verwendet werden.

Die Auslegung des Gleichspannungswandlers für einen Normalbetrieb bei maximaler primärseitigen und maximaler sekundärseitigen Gleichspannung erfordert, dass Nphase ^{∗} Uc = (UDC1 - UDC2) ^{∗} (1 + M) + UDC2 ^{∗} (1 + M) = UDC1 ^{∗} (1 + M), wobei Nphase die Anzahl der Submodule in einer Phase des Gleichspannungswandlers beziehungsweise der Umrichterreihenschaltung, Uc eine an den Klemmen des Submoduls erzeugbare Submodulspannung, UDC1 die primärseitige Gleichspannung, UDC2 die sekundärseitige Gleichspannung und M einen Modulationsindex bezeichnen. Der Modulationsindex ist dabei als das doppelte Verhältnis des Betrags einer modulierten Wechselspannung Uac zur entsprechenden Gleichspannung Udc, M = 2 ^{∗} Uac / Udc.

Unter Berücksichtigung einer möglichen Absenkung der sekundärseitigen Gleichspannung auf null ist für die Auslegung gefordert, dass Nphase ^{∗} Uc = (UDC1 + (UDC1 - UDC2) ^{∗} M + UDC2 ^{∗} (1 + M) = UDC1 ^{∗} (1 + M) + UDC2. Diese Formel kann dazu verwendet werden, die Anzahl der Submodule in der Umrichterreihenschaltung zu bestimmen. Mit anderen Worten erlaubt eine Bereitstellung der Anzahl der Submodule gemäß dieser Formel eine Aufrechterhaltung einer konstanten primärseitigen Gleichspannung auch bei einer Absenkung der sekundärseitigen Gleichspannung auf nahezu null. Die beiden obigen Formeln setzen im Übrigen voraus, dass alle Submodule gleichartig aufgebaut sind.

Es wird als vorteilhaft angesehen, wenn der Gleichspannungswandler eine Regelungseinrichtung umfasst, die zur Regelung einer variablen sekundärseitigen Ausgangsspannung eingerichtet ist.

Gemäß der Erfindung ist die Anzahl der Submodule des ersten und zweiten Teilumrichters mittels einer geeigneten Absenkungsschalteinheit in Abhängigkeit von der sekundären Ausgangsspannung variierbar. Bei dieser Variante der Erfindung können mittels der Absenkungsschalteinheit Submodule dem ersten oder dem zweiten Teilumrichter nach Bedarf zugeschaltet beziehungsweise von ihnen getrennt werden. Die Absenkungsschalteinheit umfasst dabei zweckmäßigerweise mehrere diskrete Schaltelemente. Mit anderen Worten können die Teilumrichter entsprechend der zu stellenden sekundärseitigen Gleichspannung mittels der diskreten Schaltelemente konfiguriert werden. Die Absenkungsschalteinheit kann mehrere Absenkungsschalter umfassen, die eine Umstellung des Übersetzungsverhältnisses zwischen der primärseitigen und der sekundärseitigen Gleichspannung erlauben. Die Absenkungsschalter können als mechanische Schalter aber auch zum Beispiel als bidirektional sperrende leistungselektronische Schalter (Thyristor, IGBT, IGCT) ausgeführt sein.

Vorzugsweise ist die Kopplungseinrichtung dazu eingerichtet, den Gleichspannungswandler mit einem Wechselspannungsnetz zu verbinden. Dies kann beispielsweise dadurch erreicht werden, dass die Kopplungseinrichtung ein Transformator ist. Der Transformator kann eine Primärwicklung umfassen, die mit dem ersten Teilumrichter beziehungsweise dessen Wechselspannungsanschluss verbunden ist, eine Sekundärwicklung, die mit dem zweiten Teilumrichter beziehungsweise mit dessen Wechselspannungsanschluss verbunden ist sowie eine Tertiärwicklung, die mit dem Wechselspannungsnetz verbindbar ist. Eine beispielsweise am Gleichspannungswandler anfallende überschüssige Leistung kann auf diese Weise vorteilhaft in das Wechselspannungsnetz eingespeist werden.

Bevorzugt sind die Submodule der Teilumrichter als Vollbrückenschaltungen oder Halbbrückenschaltungen realisiert. Eine Halbbrückenschaltung ist beispielsweise in der DE 101 03 031 B4 beschrieben. Eine Halbbrückenschaltung weist eine Reihenschaltung von zwei

Leistungshalbleiterschalteinheiten mit gleicher Durchlassrichtung, wobei jede Leistungshalbleiterschalteinheit wenigstens einen ein- und abschaltbaren Leistungshalbleiterschalter aufweist. Ferner umfasst die Halbbrückenschaltung einen Energiespeicher, beispielsweise einen Leistungskondensator, der parallel zu der Reihenschaltung der Leistungshalbleiterschalteinheiten angeordnet ist. Die Halbbrückenschaltung verfügt über zwei Anschlüsse beziehungsweise Klemmen, wobei ein erster Anschluss mit einer der Leistungshalbleiterschalteinheiten und mit dem Energiespeicher verbunden ist und der andere an einem Potenzialpunkt zwischen den Leistungshalbleiterschalteinheiten angeordnet ist. Aufgrund der verhältnismäßig kleinen Verluste sind solche Kopplungsmodule besonders kostengünstig im Betrieb. Entsprechend können die Konvertermodule (alle oder zumindest einige) in Form einer der im Zusammenhang mit den Submodulen beschriebenen Schaltungen realisiert sein.

Die Submodule können jedoch auch als Vollbrückenschaltungen oder andere geeignete Schaltungen, wie sogenannte Double-Clamp-Module realisiert sein. Es ist selbstverständlich auch denkbar, dass nicht alle Submodule gleichartig aufgebaut sind. Vielmehr können beispielsweise einige der Submodule als Halbbrückenschaltungen, andere als Vollbrückenschaltungen ausgebildet sein.

Zweckmäßigerweise sind der erste und/oder der zweite Teilumrichter ein modularer Mehrstufenumrichter (MMC). Dazu weisen die Phasenzweige des Umrichters jeweils eine Reihenschaltung zweipoliger Submodule auf, wobei jedes Submodul ein- und abschaltbare Leistungshalbleiterschalter sowie einen Energiespeicher, bevorzugt in Form eines Kondensators, umfasst. Ferner ist jedes der Submodule einzeln ansteuerbar. Eine an dem Phasenzweig abfallende Spannung ist gleich der Summe von Spannungen, die an den zugehörigen Submodulen abfallen. Mittels des MMC ist eine besonders vorteilhafte stufenförmige Konverterspannung erzeugbar. Ein MMC ist beispielsweise in der DE 101 03 031 B4 beschrieben. Bevorzugt sind die Submodule als Halbbrückenschaltungen oder als Vollbrückenschaltungen ausgebildet. Der MMC kann auch unterschiedlich ausgebildete Submodule umfassen, so dass nicht alle Submodule des MMC gleichartig aufgebaut sind. Im Betrieb wird von den Submodulen in jeder der Umrichterphasen der beiden Umrichter eine Phasenspannung erzeugt, die eine Überlagerung einer Gleichspannung und einer Wechselspannung ist. Wird beispielsweise die oberspannungsseitige Gleichspannung mit UDC1 bezeichnet, so ist die Phasenspannung gleich UDC1+uac, wobei mit uac der Wechselspannungsanteil der Phasenspannung bezeichnet wird.

Die Erfindung betrifft ferner eine Anlage zum Übertragen elektrischer Leistung mit einem Spannungswandler, der primärseitig mit einer ersten Gleichstromübertragungsleitung und/oder einem ersten Wechselspannungsnetz und sekundärseitig mit einer zweiten Gleichstromübertragungsleitung verbindbar ist, und einem unidirektionalen Gleichrichter, der gleichspannungsseitig mit der zweiten Gleichstromübertragungsleitung und wechselspannungsseitig mit einem zweiten Wechselspannungsnetz verbindbar ist.

Die Aufgabe der vorliegenden Erfindung ist es, eine solche Anlage vorzuschlagen, die möglichst zuverlässig ist.

Die Aufgabe wird bei einer artgemäßen Anlage erfindungsgemäß dadurch gelöst, dass der Spannungswandler ein erfindungsgemäßer Gleichspannungswandler ist.

Der Vorteil der erfindungsgemäßen Anlage besteht darin, dass die Anlage besonders flexibel auf Absenkungen der sekundärseitigen Gleichspannung reagieren kann und die primärseitige Gleichspannung auch bei einer solchen Absenkung konstant halten kann.

Besonders geeignet ist die Anlage für Anwendungen, bei denen der Gleichrichter auf See und der Gleichspannungswandler an Land angeordnet sind.

Bevorzugt ist der unidirektionale Gleichrichter ein Diodengleichrichter. Diodengleichrichter sind besonders kostengünstig aufgrund ihrer relativ kleinen Gewichts und des einfachen Aufbaus. Der Diodenleichrichter kann beispielsweise als eine Sechspulsbrücke, eine Zwölfpulsbrücke oder eine Vierundzwanzigpulsbrücke aufgebaut sein.

Die Erfindung soll im Folgenden anhand der Figuren 1 bis 8 weiter erläutert werden.
Figur 1 zeigt ein erstes Ausführungsbeispiel eines Gleichspannungswandlers in einer schematischen Darstellung;
Figur 2 zeigt ein Ausführungsbeispiel eines Submoduls des Gleichspannungswandlers in einer schematischen Darstellung;
Figur 3 zeigt ein weiteres Ausführungsbeispiel eines Submoduls des Gleichspannungswandlers in einer schematischen Darstellung;
Figur 4 zeigt ein erstes Ausführungsbeispiel einer Anlage zum Übertragen elektrischer Leistung in einer schematischen Darstellung;
Figur 5 zeigt ein zweites Ausführungsbeispiel einer Anlage zum Übertragen elektrischer Leistung in einer schematischen Darstellung;
Figur 6 zeigt ein viertes Ausführungsbeispiel eines erfindungsgemäßen Gleichspannungswandlers in einer schematischen Darstellung;
Figur 7 zeigt ein fünftes Ausführungsbeispiel eines erfindungsgemäßen Gleichspannungswandlers in einer schematischen Darstellung;
Figur 8 zeigt ein sechstes Ausführungsbeispiel eines erfindungsgemäßen Gleichspannungswandlers in einer schematischen Darstellung.

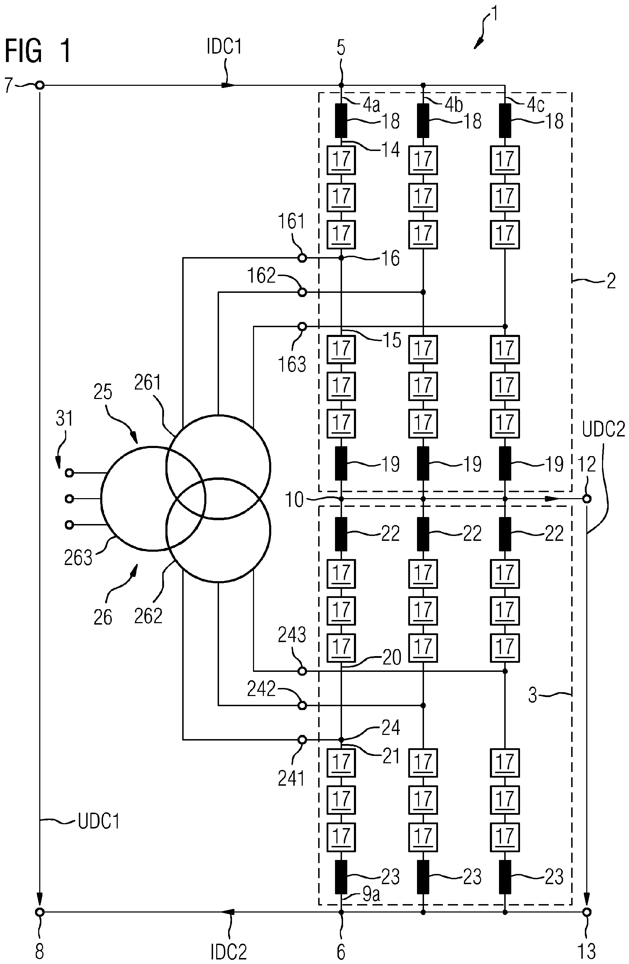

Im Einzelnen ist in Figur 1 ein erstes Ausführungsbeispiel eines Gleichspannungswandlers 1 dargestellt. Der Gleichspannungswandler 1 umfasst einen ersten Teilumrichter 2 sowie einen zweiten Teilumrichter 3. Der erste Teilumrichter 2 weist eine erste Umrichterphase 4a auf, wobei sich die erste Umrichterphase 4a zwischen einem ersten primärseitigen Gleichspannungspol 5 und einem zweiten primärseitigen Gleichspannungspol 6 erstreckt. Der erste primärseitige Gleichspannungspol 5 ist mit einem ersten primärseitigen Gleichspannungsanschluss 7 verbunden, der zweite primärseitige Gleichspannungspol 6 ist mit einem zweiten primärseitigen Gleichspannungsanschluss 8 verbunden. Die primärseitigen Gleichspannungsanschlüsse 7, 8 sind dazu eingerichtet, den Gleichspannungswandler 1 mit einer primärseitigen Gleichspannungsleitung (in Figur 1 nicht dargestellt) beziehungsweise Gleichspannungsnetz zu verbinden.

Entsprechend weist der zweite Umrichter 3 eine erste Umrichterphase 9a auf, die sich zwischen einem ersten sekundärseitigen Gleichspannungspol 10 und einem zweiten sekundärseitigen Gleichspannungspol erstreckt, wobei im dargestellten Ausführungsbeispiel der zweite sekundärseitigen Gleichspannungspol und der zweite primärseitige Gleichspannungspol 6 zusammenfallen. Der erste sekundärseitige Gleichspannungspol 10 ist mit einem ersten sekundärseitige Gleichspannungsanschluss 12 verbunden. Der zweite sekundärseitige Gleichspannungspol ist mit einem zweiten sekundärseitigen Gleichspannungsanschluss 13 verbunden. Die beiden sekundärseitigen Gleichspannungsanschlüsse 12, 13 sind dazu eingerichtet, den Gleichspannungswandler 1 beziehungsweise den zweiten Teilumrichter 3 mit einer in Figur 1 nicht dargestellten sekundärseitigen Gleichspannungsleitung zu verbinden.

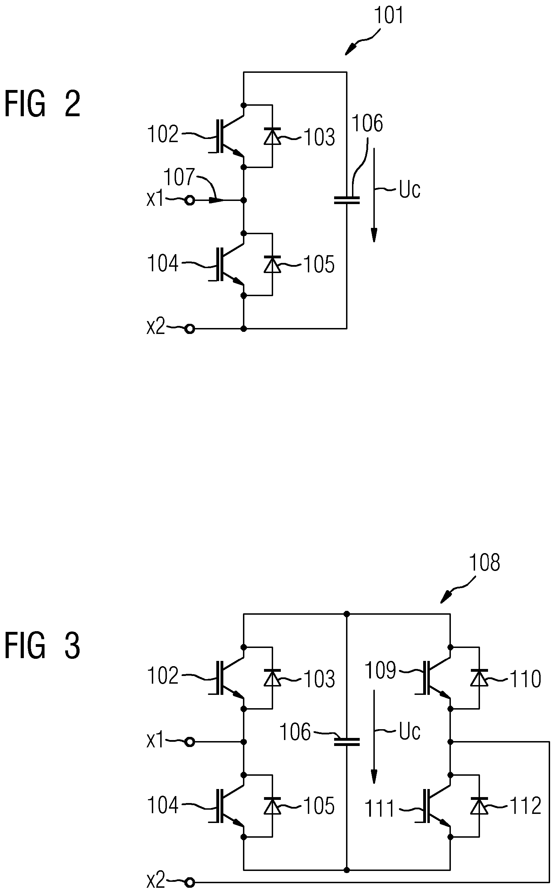

Die erste Umrichterphase 4a des ersten Teilumrichters 2 umfasst einen ersten Phasenzweig 14 und einen zweiten Phasenzweig 15. Der erste Phasenzweig 14 des ersten Teilumrichters 2 und der zweite Phasenzweig 15 des ersten Teilumrichters 2 sind in einem Potenzialpunkt 16 miteinander verbunden. Der Potenzialpunkt 16 bildet einen ersten Wechselspannungsanschluss 161 des ersten Umrichters 2. Der erste Phasenzweig 14 des ersten Teilumrichters 2 weist eine Reihenschaltung zweipoliger Submodule 17 auf, wobei jedes der Submodule 17 einen Energiespeicher sowie wenigstens einen Leistungshalbleiterschalter umfasst. In Reihe zu der Reihenschaltung zweipoliger Submodule 17 ist eine Glättungsdrossel 18 angeordnet. Ebenso umfasst der zweite Phasenzweig 15 des ersten Teilumrichters 2 eine Reihenschaltung zweipoliger Submodule 17 und eine dazu in Reihe geschaltete Glättungsdrossel 19. Gemäß dem dargestellten Ausführungsbeispiel sind die Submodule 17 als eine der in den Figuren 2 und 3 gezeigten Schaltungen ausgebildet, so dass der erste Teilumrichter 2 ein modularer Mehrstufenumrichter. Parallel zur ersten Umrichterphase 4a sind zwischen dem ersten primärseitigen Gleichspannungspol 5 und dem ersten sekundärseitigen Gleichspannungspol 10 eine zweite und eine dritte Umrichterphase 4b beziehungsweise 4c angeordnet. Die beiden Umrichterphasen 4b und 4c sind zur ersten Umrichterphase 4a gleichartig aufgebaut.

Entsprechend umfasst die erste Umrichterphase 9a des zweiten Teilumrichters 3 einen ersten Phasenzweig 20 und einen zweiten Phasenzweig 21. Der erste Phasenzweig 20 des zweiten Teilumrichters 3 weist eine Reihenschaltung der zweipoligen Submodule 17 auf sowie eine dazu in Reihe geschaltete Glättungsdrossel 22. Der zweite Phasenzweig 21 weist ebenfalls eine Reihenschaltung der zweipoligen Submodule 17 sowie eine dazu in Reihe geschaltete Glättungsdrossel 23 auf. Die beiden Phasenzweige 20, 21 des zweiten Teilumrichters 3 sind in einem Potenzialpunkt 24 miteinander verbunden, der einen ersten Wechselspannungsanschluss 241 des zweiten Umrichters 3 bildet. Parallel zur ersten Umrichterphase 9a sind zwischen dem ersten sekundärseitigen Gleichspannungspol 10 und dem zweiten sekundärseitigen Gleichspannungspol 6 eine zweite und eine dritte Umrichterphase 9b beziehungsweise 9c angeordnet. Die beiden Umrichterphasen 9b und 9c sind zur ersten Umrichterphase 9a gleichartig aufgebaut.

Der Gleichspannungswandler 1 umfasst ferner eine Kopplungseinrichtung 25. Die Kopplungseinrichtung 25 umfasst einen Transformator 26. Der Transformator 26 umfasst eine dreiphasige Primärwicklung 261, die mit dem ersten Wechselspanungsanschluss 161 sowie mit einem zweiten und einem dritten Wechselspannungsanschluss 162, 163 des ersten Teilumrichters 2 verbunden ist. Ferner umfasst der Transformator 26 eine Sekundärwicklung 262, die mit dem ersten Wechselspannungsanschluss 241 sowie mit einem zweiten Wechselspannungsanschluss 242 und einem dritten Wechselspannungsanschluss 243 des zweiten Teilumrichters 3 verbunden ist. Ferner umfasst der Transformator 26 eine Tertiärwicklung 263, die mit einem Wechselspannungsanschluss 31 des Gleichspannungswandlers 1 verbunden ist, der zum Anschluss des Gleichspannungswandlers an ein externes Wechselspannungsnetz eingerichtet ist.

Die Anzahl der Submodule 17 in den Phasenzweigen der beiden Teilumrichter ist derart gewählt, dass auch bei einer Absenkung der sekundärseitigen Gleichspannung UDC2 auf null eine konstante primärseitige Gleichspannung UDC1 beibehalten werden kann. Hierzu ist die zuvor beschriebene Gleichung Nphase ^{∗} Uc = UDC1 ^{∗} (1 + M) + UDC2 verwendet. Die in Figur 1 dargestellte Anzahl von drei Submodulen pro Phasenzweig ist lediglich schematisch zu verstehen und dient nur der Übersichtlichkeit der Darstellung.

In einem Normalbetrieb des Gleichspannungswandlers 1 fällt an den oberspannungsseitigen Gleichspannungsanschlüssen 7, 8 eine Spannung UDC1 ab. Entsprechend fällt an den unterspannungsseitigen Gleichspannungsanschlüssen 12, 13 eine Spannung UDC2 ab. Dementsprechend fließt an den oberspannungsseitigen Gleichspannungspolen ein Strom IDC1 und an den unterseitigen Gleichspannungspolen ein Strom IDC2, deren Richtungen jeweils durch entsprechende Pfeile in Figur 1 angedeutet sind. Um einen Energieaustausch zwischen der Primärseite und der Sekundärseite zu gewährleisten, modelliert der erste Teilumrichter 2 eine Spannung, die sich aus der Spannung UDC1 und einer Wechselspannung UAC1 zusammensetzt. Es gilt, dass für eine am ersten Phasenzweig 14 des Teilumrichters 2 abfallende Spannung U11: U11 = UDC1/2 + UAC1. Entsprechend gilt für eine an dem zweiten Phasenzweig 15 des ersten Teilumrichters abfallende Spannung U12: U12 = UDC1/2 - UAC1. Der zweite Teilumrichter 3 erzeugt zugleich im ersten Phasenzweig 20 eine Spannung U21, für die gilt, dass U21 = UDC2/2 + UAC2, und im zweiten Phasenzweig 21 eine Spannung U22, für die gilt, dass U22 = UDC2/2 - UAC2. Die Modellierung der Spannungen erfolgt mittels einer grafisch nicht dargestellten Steuer- und regeleinrichtung zur Ansteuerung der Halbleiterschalter der Submodule 17.

Die Wechselspannungen UAC1 und UAC2 haben die gleiche Frequenz und Amplitude, sind jedoch gegeneinander phasenverschoben. Auf diese Weise ist erreicht, dass ein Kreis-Wechselstrom erzeugt wird. Die Kopplungseinrichtung 25 bildet unter Einbeziehung der Phasenzweige der beiden Teilumrichter 2, 3 einen geschlossenen Strompfad für den Kreis-Wechselstrom, wobei die Gleichströme IDC1 und IDC2 nicht zwischen den Teilumrichtern 2, 3 fließen können.

In den nachfolgenden Figuren 2 und 3 sind zwei Ausführungsbeispiele der Submodule 17 der Teilumrichter 2, 3 des Gleichspannungswandlers 1 der Figur 1 gezeigt, die auch in den in den übrigen Figuren dargestellten Ausführungsbeispiele des Gleichspannungswandlers beziehungsweise der Anlage eingesetzt werden können.

Figur 2 zeigt im Einzelnen ein Submodul in Form einer Halbbrückenschaltung 101. Die Halbbrückenschaltung 101 weist zwei Anschlüsse X1 und X2 auf. Der Anschluss X1 kann beispielsweise die Halbbrückenschaltung 101 mit dem Anschluss X2 einer weiteren Halbbrückenschaltung verbinden, so dass eine Reihenschaltung der Submodule gebildet wird.

Die Halbbrückenschaltung 101 umfasst einen ersten Halbleiterschalter 102 in Form eines Bipolartransistors mit isolierter Gate-Elektrode (IGBT), dem eine Freilaufdiode 103 antiparallel geschaltet ist. Ferner umfasst die Halbbrückenschaltung 101 einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Der erste Anschluss X1 ist an einem Potenzialpunkt 113 zwischen den beiden Halbleiterschaltern 102 und 104 angeordnet. Der zweite Anschluss X2 ist mit dem Emitter des zweiten Halbleiterschalters 104 verbunden.

Parallel zu den beiden Halbleiterschaltern 102, 104 ist ein Energiespeicher in Form eines Hochleistungskondensators 106 angeordnet. Durch eine geeignete Ansteuerung der Halbleiterschalter 102, 104 kann, bei einer durch einen Pfeil 107 angedeuteten Betriebsstromrichtung, der Kondensator 106 zugeschaltet oder überbrückt werden, so dass an den Anschlüssen X1, X2 entweder die am Kondensator 106 abfallende Spannung Uc oder eine Spannung null abfällt.

Ein Beispiel eines Submoduls in Form einer Vollbrückenschaltung 108 ist in Figur 3 schematisch dargestellt. Die Vollbrückenschaltung 108 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenschaltung 108 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Energiespeicher in Form eines Hochleistungskondensators 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Kondensator 106 abfallenden Spannung Uc, der am Kondensator 106 abfallenden Spannung jedoch mit entgegengesetzter Polarität oder der Spannung null entspricht.

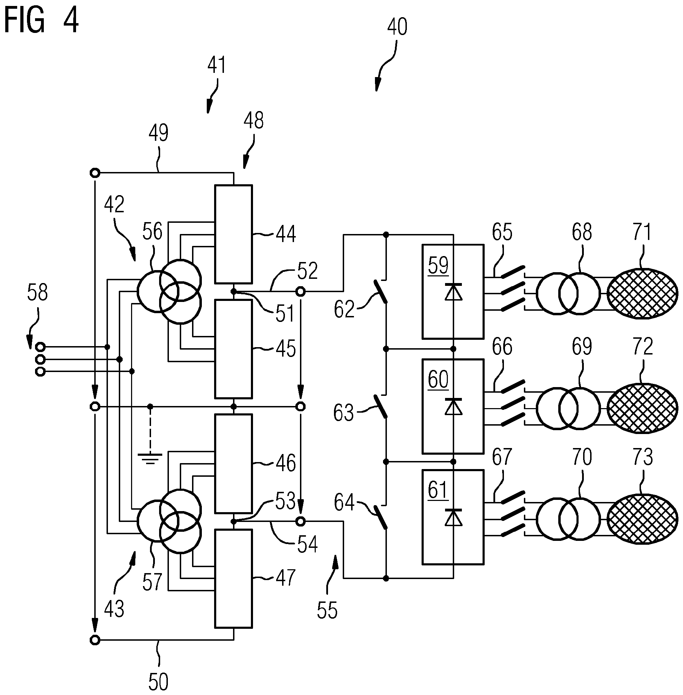

In Figur 4 ist eine Anlage 40 zum Übertragen elektrischer Leistung dargestellt. Die Anlage umfasst einen Gleichspannungswandler 41. Der Gleichspannungswandler 41 ist hierbei in einer Bipolausführung gezeigt. Daher umfasst der Gleichspannungswandler 41 einen ersten Teilwandler 42 und einen zweiten Teilwandler 43, die in Reihe geschaltet sind. Der erste Teilwandler 42 ist wie der Gleichspannungswandler 1 der Figur 1 aufgebaut. Ebenso ist der zweite Teilwandler 43 aufgebaut wie der Gleichspannungswandler 1 der Figur 1. Damit umfasst der Gleichspannungswandler 41 einen ersten Teilumrichter 44, einen zweiten Teilumrichter 45, einen dritten Teilumrichter 46 und einen vierten Teilumrichter 47, die in Reihe miteinander unter Ausbildung einer Umrichterreihenschaltung 48 verbunden sind. Die Umrichterreihenschaltung 48 erstreckt sich zwischen einem ersten und einem zweiten primärseitigen Gleichspannungspol 49 beziehungsweise 50. An einem Potenzialpunkt 51 zwischen dem ersten Teilumrichter 44 und dem zweiten Teilumrichter 45 ist ein erster sekundärseitiger Gleichspannungspol 52 angeordnet. An eine Potenzialpunkt 53 zwischen dem dritten Teilumrichter 46 und dem vierten Teilumrichter 47 ist ein zweiter sekundärseitiger Gleichspannungspol 54 angeordnet. Über die beiden sekundärseitigen Gleichspannungspole 52, 54 ist der Gleichspannungswandler 51 an eine Hochspannungsgleichstromübertragungsstrecke 55 angeschlossen. Die Wechselspannungsanschlüsse des ersten Teilumrichter 44 und des zweiten Teilumrichter 45 sind miteinander mittels eines Transformators 56 verbunden. Ebenso sind die Wechselspannungsanschlüsse des dritten Teilumrichters 46 und des vierten Teilumrichters 47 mittels eines Transformators 57 miteinander verbunden. Zudem sind die beiden Transformatoren 56 und 57 über jeweils eine Tertiärwicklung miteinander und mit einem externen Wechselspannungsanschluss 58 verbunden, der zum Anschluss des Gleichspannungswandlers 41 an ein externes Wechselspannungsnetz eingerichtet ist.

Der Gleichspannungswandler 41 ist an Land angeordnet und mittels der Hochspannungsgleichstromübertragungsleitung 55 mit einer auf See angeordneten Reihenschaltung unidirektionaler Gleichrichter 59, 60 und 61 verbunden. Jeder der unidirektionalen Gleichrichter 59, 60, 61, die im vorliegenden Ausführungsbeispiel als Diodengleichrichter ausgeführt sind, ist mittels einer Schaltvorrichtung 62 beziehungsweise 63, 64 gleichspannungsseitig überbrückbar. Wechselspannungsseitig ist jeder der Diodengleichrichter 59 - 61 mit einem eigenen Wechselspannungsnetzt 65 beziehungsweise 66, 67 über einen Transformator 68 beziehungsweise 69, 70 mit einem Windpark 71 beziehungsweise 72, 73 verbunden. Die im Windpark erzeugte elektrische Leistung wird somit mittels der Gleichrichter 59 - 61 gleichgerichtet und über die Hochspannungsgleichstromübertragungsstrecke 55 an den Gleichspannungswandler 41 übertragen. Der Gleichspannungswandler 41 wandelt die Gleichspannung in eine weitere Gleichspannung einer höheren Spannungsstufe und überträgt diese an eine zusätzliche Hochspannungsgleichstromübertragungsstrecke (in Figur 4 nicht figürlich dargestellt). Zugleich ist es möglich, mittels des Gleichspannungswandlers 41 elektrische Leistung direkt in ein Wechselspannungsnetz über den Wechselspannungsanschluss 58 einzuspeisen.

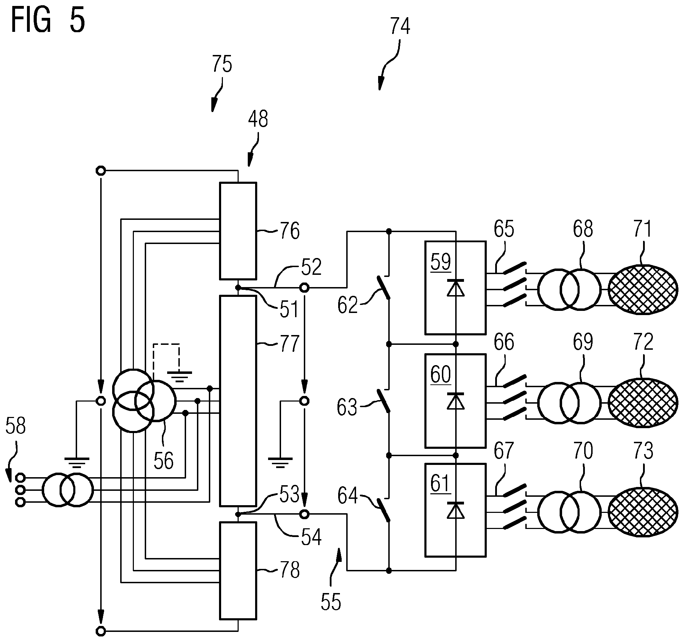

Figur 5 zeigt ein weiteres Ausführungsbeispiel einer Anlage 74 zur Übertragung elektrischer Leistung. In den Figuren 4 und 5 sind auch Übersichtlichkeitsgründen die gleichen gleichartigen Elemente mit gleichen Bezugszeichen versehen. Die Anlage 74 der Figur 5 unterscheidet sich von der Anlage 40 der Figur 4 durch einen unterschiedlichen Aufbau des Gleichspannungswandlers. Der Gleichspannungswandler 75 der Anlage 74 liegt in einer Ausführung als symmetrischer Monopol vor. Der Gleichspannungswandler 75 umfasst einen ersten Teilumrichter 76, einen zweiten Teilumrichter 77 und einen dritten Teilumrichter 78. Die drei Teilumrichter 76 - 78 sind über ihre Wechselspannungsanschlüsse und einen Transformator 56 miteinander verbunden. Die Hochspannungsgleichstromübertragungsleitung 55 schließt mit einem ersten Gleichspannungspol 52 an einen Potenzialpunkt 51 zwischen dem ersten Teilumrichter 76 und dem zweiten Teilumrichter 77. Ein zweiter Pol 54 der Gleichstromübertragungsleitung 55 schließt an einen Potenzialpunkt 53 zwischen dem zweiten Teilumrichter 77 und dem dritten Teilumrichter 78. Der Aufbau der Teilumrichter 76 - 78 entspricht jeweils dem Aufbau der Teilumrichter des Gleichspannungsanlass 41 der Figur 4. Im Übrigen entspricht die Funktionsweit der Anlage 74 denjenigen der Anlage 40 der Figur 4.

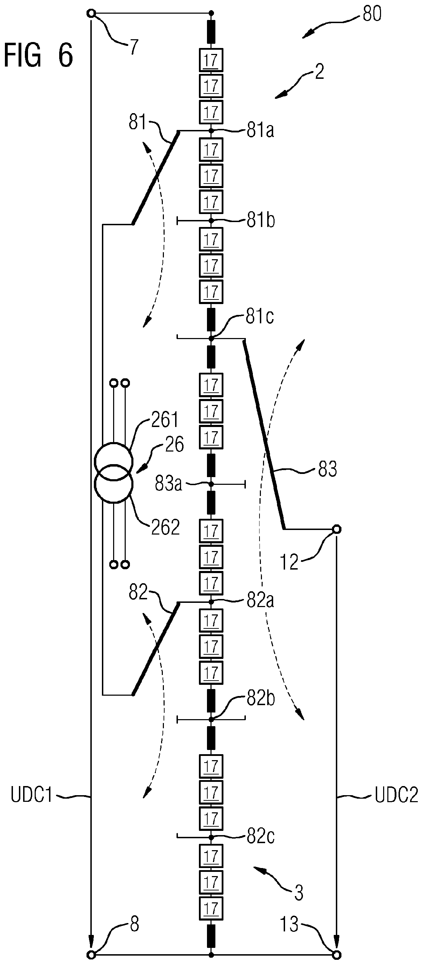

Figur 6 zeigt einen erfindungsgemäßen Gleichspannungswandler 80. Der Gleichspannungswandler 80 ist dreiphasig, es ist jedoch aus Gründen der Übersichtlichkeit lediglich eine Phase figürlich dargestellt. Die beiden anderen Phasen sind zur ersten Phase entsprechend baugleich.

Der Gleichspannungswandler umfasst in den Teilumrichtern 2 und 3 Submodule 17 in Halbbrückenkonfiguration. Zur Übertragung der Leistung zwischen den Teilumrichtern ist der Transformator 26 vorgesehen.

Der Gleichspannungswandler 80 umfasst ferner eine Absenkungsschalteinheit, die einen ersten Absenkungsschalter 81, einen zweiten Absenkungsschalter 82 sowie einen dritten Absenkungsschalter 83 umfasst. Der erste Absenkungsschalter 81 kann die Primärwicklung 261 des Transformators 26 mit einem von drei unterschiedlichen Potenzialpunkten 81a, 81b, 81c im ersten Teilumrichter 2 verbinden. Der zweite Absenkungsschalter 81 kann die Sekundärwicklung 262 des Transformators 26 mit einem von drei unterschiedlichen Potenzialpunkten 82a, 82b, 82c im zweiten Teilumrichter 3 verbinden. Der dritte Absenkungsschalter 83 kann den ersten sekundärseitigen Gleichspannungsanschluss 12 des Gleichspannungswandlers 80 mit dem Potenzialpunkt 81c, einem Potenzialpunkt 83a zwischen dem ersten und dem zweiten Teilumrichter 2 beziehungsweise 3 oder mit dem Potenzialpunkt 82b verbinden.

Die Absenkungsschalteinheit kann also unterschiedliche Übersetzungsverhältnisse für die primärseitige und sekundärseitige Gleichspannung UDC1 und UDC2 erzeugen. In der in Figur 6 dargestellten Stellung der Absenkungsschalter 81-83 ist beispielsweise ein Übersetzungsverhältnis von 5:3 eingestellt. Somit kann der Gleichspannungswandler entsprechend der zu stellenden sekundärseitigen Gleichspannung konfiguriert werden.

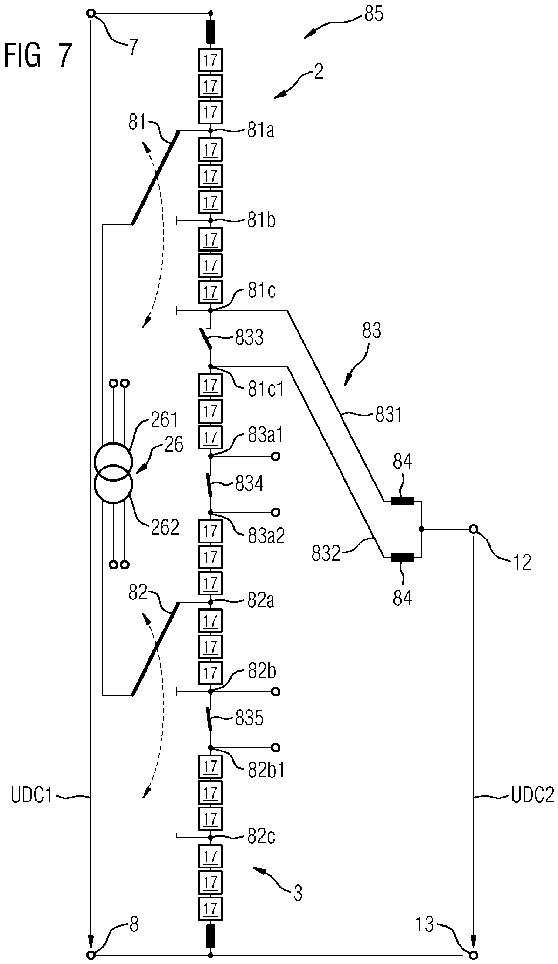

Figur 7 zeigt einen erfindungsgemäßen Gleichspannungswandler 85. Der Gleichspannungswandler 85 ist dreiphasig, es ist jedoch aus Gründen der Übersichtlichkeit lediglich eine Phase figürlich dargestellt. Die beiden anderen Phasen sind zur ersten Phase entsprechend baugleich. Der Gleichspannungswandler 85 ähnelt in seinem Aufbau dem Gleichspannungsschalter 80 der Figur 6. Er umfasst in den Teilumrichtern 2 und 3 Submodule 17 in Halbbrückenkonfiguration. Zur Übertragung der Leistung zwischen den Teilumrichtern ist der Transformator 26 vorgesehen.

Der Gleichspannungswandler 85 umfasst ferner eine Absenkungsschalteinheit, die einen ersten Absenkungsschalter 81, einen zweiten Absenkungsschalter 82 sowie einen dritten Absenkungsschalter 83 umfasst. Der erste Absenkungsschalter 81 kann die Primärwicklung 261 des Transformators 26 mit einem von drei unterschiedlichen Potenzialpunkten 81a, 81b, 81c im ersten Teilumrichter 2 verbinden. Der zweite Absenkungsschalter 81 kann die Sekundärwicklung 262 des Transformators 26 mit einem von drei unterschiedlichen Potenzialpunkten 82a, 82b, 82c im zweiten Teilumrichter 3 verbinden. Der dritte Absenkungsschalter 83 umfasst im Unterschied zur Ausführung des Gleichspannungsschalters 80 der Figur 6 zwei Schaltzweige 831 und 832. In jedem der beiden Schaltzweige 831, 832 ist eine Induktivität 84 angeordnet. Durch die Anordnung der Induktivitäten 84 in den Schaltzweigen 831, 832 kann die erforderliche Gesamtanzahl an bereitzustellenden Induktivitäten im Gleichspannungswandler 85 reduziert werden (insbesondere gegenüber der Ausführung des Gleichspannungswandlers 80 der Figur 6).

In einer ersten Schaltstellung verbindet der erste Schaltzweig 831 den ersten sekundärseitigen Gleichspannungsanschluss 12 des Gleichspannungswandlers 85 mit dem Potenzialpunkt 81c. Der zweite Schaltzweig 832 verbindet in der ersten Schaltstellung den ersten sekundärseitigen Gleichspannungsanschluss 12 mit einem Potenzialpunkt 81c1. Die Verbindung zwischen den Potenzialpunkten 81c und 81c1 ist dabei mittels eines Schalters 833 unterbrochen.

In einer zweiten Schaltstellung verbindet der erste Schaltzweig 831 den ersten sekundärseitigen Gleichspannungsanschluss 12 des Gleichspannungswandlers 85 mit dem Potenzialpunkt 83a1. Der zweite Schaltzweig 832 verbindet in der ersten Schaltstellung den ersten sekundärseitigen Gleichspannungsanschluss 12 mit einem Potenzialpunkt 83a2. Die Verbindung zwischen den Potenzialpunkten 83a1 und 83a2 ist dabei mittels eines Schalters 834 unterbrochen.

In einer dritten Schaltstellung verbindet der erste Schaltzweig 831 den ersten sekundärseitigen Gleichspannungsanschluss 12 des Gleichspannungswandlers 85 mit dem Potenzialpunkt 82b. Der zweite Schaltzweig 832 verbindet in der ersten Schaltstellung den ersten sekundärseitigen Gleichspannungsanschluss 12 mit einem Potenzialpunkt 82b1. Die Verbindung zwischen den Potenzialpunkten 81c und 81c1 ist dabei mittels eines Schalters 835 unterbrochen.

Die Absenkungsschalteinheit kann also unterschiedliche Übersetzungsverhältnisse für die primärseitige und sekundärseitige Gleichspannung UDC1 und UDC2 erzeugen. In der in Figur 7 dargestellten Stellung der Absenkungsschalter 81-83 ist beispielsweise ein Übersetzungsverhältnis von 5:3 eingestellt. Somit kann der Gleichspannungswandler entsprechend der zu stellenden sekundärseitigen Gleichspannung konfiguriert werden.

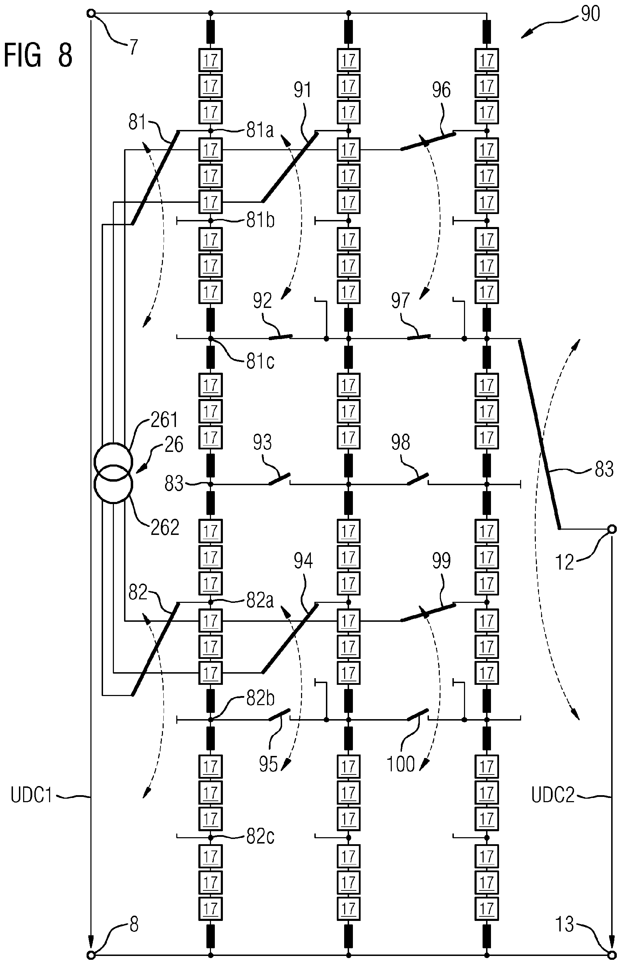

In Figur 8 findet sich ein erfindungsgemäßer Gleichspannungswandler 90, der eine dreiphasige Darstellung des Gleichspannungswandlers 80 der Figur 6 darstellt. Der Aufbau und Funktionsweise der Gleichspannungswandler 80 und 90 sind im Wesentlichen gleich. Um Wiederholungen zu vermeiden, wird dazu an dieser Stelle auf die Beschreibung der Figur 6 verwiesen. Es ist erkennbar, dass der Gleichspannungswandler 90 weitere Absenkungsschalter 91, 94, 96 und 99 umfasst. Dabei entspricht die Funktion der Absenkungsschalter 91 und 96 der Funktion des Absenkungsschalters 81 und die Funktion der Absenkungsschalter 94 und 99 der Funktion des Absenkungsschalters 82. Zusätzliche Schalter 92, 93, 95, 97, 98, und 100 sorgen für eine Verbindung beziehungsweise eine Trennung zwischen den Potenzialpunkten 81c, 83 beziehungsweise 82b und dem ersten sekundärseitigen Gleichspannungsanschluss 12, wenn der Absenkungsschalter 83 sich in der entsprechenden Stellung befindet.

Die in den Figuren 6-8 dargestellten erfindungsgemäßen Gleichspannungswandler sind in einer Darstellung als unsymmetrischer Monopol gezeigt. Die Anordnung und das Funktionsprinzip sind jedoch ohne Einschränkung auch auf andere Konfigurationen, beispielsweise als symmetrischer Monopol, übertragbar.

## Patentansprüche

1. Gleichspannungswandler (1) mit
- einem ersten Teilumrichter (2), der wenigstens eine erste Umrichterphase (4a) aufweist, wobei die erste Umrichterphase (4a) des ersten Teilumrichters (2) einen ersten Phasenzweig (14) und einen zweiten Phasenzweig (15) umfasst, wobei
- der erste Phasenzweig (14) des ersten Teilumrichters (2) sich zwischen einem ersten primärseitigen Gleichspannungspol (5) und einem ersten Wechselspannungsanschluss (161) des ersten Teilumrichters (2) erstreckt, und
- der zweite Phasenzweig (15) des ersten Teilumrichters (2) sich zwischen dem ersten Wechselspannungsanschluss (161) des ersten Teilumrichters und einem ersten sekundärseitigen Gleichspannungspol (6) erstreckt, und
- einem zweiten Teilumrichter (3), der wenigstens eine erste Umrichterphase (9a) aufweist, wobei die erste Umrichterphase (9a) des zweiten Teilumrichters (3) einen ersten Phasenzweig (20) und einen zweiten Phasenzweig (21) umfasst, wobei
- der erste Phasenzweig (20) des zweiten Teilumrichters (3) sich zwischen dem ersten sekundärseitigen Gleichspannungspol (10) und einem ersten Wechselspannungsanschluss (241) des zweiten Teilumrichters (3) erstreckt, und
- der zweite Phasenzweig (21) des zweiten Teilumrichters (3) sich zwischen dem ersten Wechselspannungsanschluss (241) des zweiten Teilumrichters (3) und einem zweiten sekundärseitigen Gleichspannungspol (6) erstreckt, wobei
die beiden Teilumrichter (2, 3) miteinander in Reihe geschaltet sind und zumindest einen Teil einer Umrichterreihenschaltung (4) ausbilden, die sich zwischen dem ersten und einem zweiten primärseitigen Gleichspannungspol (5, 6) erstreckt, wobei die Phasenzweige (4a, 9a) der Teilumrichter (2, 3) jeweils eine Reihenschaltung zweipoliger Submodule (17) aufweisen, die jeweils wenigstens zwei Leistungshalbleiterschalter (102, 104) und einen Energiespeicher (106) umfassen, und der erste Wechselspannungsanschluss (161) des ersten Teilumrichters und der erste Wechselspannungsanschluss (241) des zweiten Teilumrichters über eine Kopplungseinrichtung (25) miteinander verbunden sind, so dass ein Austausch elektrischer Leistung zwischen dem ersten und dem zweiten Teilumrichter ermöglicht ist, wobei die Teilumrichter (2, 3) auf eine Bereitstellung einer konstanten primärseitigen Ausgangsspannung (UDC1) bei einer variablen sekundärseitigen Ausgangsspannung (DC2) ausgelegt sind, wobei die Anzahl der Submodule (17) im ersten und zweiten Phasenzweig (14, 15) des ersten Teilumrichters (2) und die Anzahl der Submodule (17) im ersten und zweiten Phasenzweig (20, 21) des zweiten Teilumrichters (3) derart bemessen sind, dass die konstante primärseitige Ausgangsspannung (UDC1) unabhängig von der sekundärseitigen Ausgangsspannung (UDC2) bereitstellbar ist, **dadurch gekennzeichnet, dass** die Anzahl der Submodule (17) des ersten und zweiten Teilumrichters (2, 3) mittels einer geeigneten Absenkungsschalteinheit (81-83) in Abhängigkeit von der sekundären Ausgangsspannung variierbar ist.

2. Gleichspannungswandler (1) nach einem der vorangehenden Ansprüche, wobei die Kopplungseinrichtung (25) dazu eingerichtet ist, den Gleichspannungswandler (1) mit einem Wechselspannungsnetz zu verbinden.

3. Gleichspannungswandler (1) nach einem der vorangehenden Ansprüche, wobei die Kopplungseinrichtung (25) als ein Transformator (26) ausgebildet ist.

4. Gleichspannungswandler (1) nach Anspruch 3, wobei der Transformator (26) eine Primärwicklung (261), die mit dem ersten Wechselspannungsanschluss (161) des ersten Teilumrichters (2) verbunden ist, und eine Sekundärwicklung (262) aufweist, die mit dem ersten Wechselspannungsanschluss (241) des zweiten Teilumrichters (3) verbunden ist.

5. Gleichspannungswandler (1) nach Anspruch 4, wobei der Transformator (26) eine Tertiärwicklung (263) zum Anschluss des Gleichspannungswandlers (1) an ein Wechselspannungsnetz aufweist.

6. Gleichspannungswandler (1) nach Anspruch 1, wobei die Submodule (17) der Teilumrichter (2, 3) als Vollbrückenschaltungen (108) oder Halbbrückenschaltungen (101) realisiert sind.

7. Anlage (40) zum Übertragen elektrischer Leistung mit
- einem Spannungswandler (41), der primärseitig mit einer ersten Gleichstromübertragungsleitung und/oder einem ersten Wechselspannungsnetz und sekundärseitig mit einer zweiten Gleichstromübertragungsleitung (55) verbindbar ist, und
- einem unidirektionalen Gleichrichter (59), der gleichspannungsseitig mit der zweiten Gleichstromübertragungsleitung (55) und wechselspannungsseitig mit einem zweiten Wechselspannungsnetz (71) verbindbar ist,
**dadurch gekennzeichnet, dass** der Spannungswandler ein Gleichspannungswandler (1) nach Anspruch 1 ist.

8. Anlage (40) nach Anspruch 7, wobei der Gleichrichter auf See und der Gleichspannungswandler (1) an Land angeordnet sind.

9. Anlage (40) nach einem der Ansprüche 7 oder 8, wobei der unidirektionale Gleichrichter (59) ein Diodengleichrichter ist.

## Claims

1. DC-to-DC converter (1) having
- a first partial converter (2) which has at least a first converter phase (4a), wherein the first converter phase (4a) of the first partial converter (2) comprises a first phase branch (14) and a second phase branch (15), wherein
- the first phase branch (14) of the first partial converter (2) extends between a first primary-side DC voltage pole (5) and a first AC voltage terminal (161) of the first partial converter (2), and
- the second phase branch (15) of the first partial converter (2) extends between the first AC voltage terminal (161) of the first partial converter and a first secondary-side DC voltage pole (6), and
- a second partial converter (3) which has at least a first converter phase (9a), wherein the first converter phase (9a) of the second partial converter (3) comprises a first phase branch (20) and a second phase branch (21), wherein
- the first phase branch (20) of the second partial converter (3) extends between the first secondary-side DC voltage pole (10) and a first AC voltage terminal (241) of the second partial converter (3), and
- the second phase branch (21) of the second partial converter (3) extends between the first AC voltage terminal (241) of the second partial converter (3) and a second secondary-side DC voltage pole (6), wherein
the two partial converters (2, 3) are connected in series with one another and form at least part of a converter series circuit (4) which extends between the first and a second primary-side DC voltage pole (5, 6), wherein the phase branches (4a, 9a) of the partial converters (2, 3) each have a series circuit of two-pole submodules (17) which each comprise at least two power semiconductor switches (102, 104) and an energy store (106), and the first AC voltage terminal (161) of the first partial converter and the first AC voltage terminal (241) of the second partial converter are connected to one another via a coupling device (25), with the result that an exchange of electric power between the first and the second partial converter is enabled, wherein the partial converters (2, 3) are designed to provide a constant primary-side output voltage (UDC1) in the case of a variable secondary-side output voltage (DC2), wherein the number of submodules (17) in the first and second phase branch (14, 15) of the first partial converter (2) and the number of submodules (17) in the first and second phase branch (20, 21) of the second partial converter (3) are such that the constant primary-side output voltage (UDC1) is able to be provided independently of the secondary-side output voltage (UDC2), **characterized in that** the number of submodules (17) of the first and second partial converter (2, 3) is able to be varied by means of a suitable step-down switching unit (81-83) in dependence on the secondary output voltage.

2. DC-to-DC converter (1) according to the preceding claim, wherein the coupling device (25) is configured to connect the DC-to-DC converter (1) to an AC voltage network.

3. DC-to-DC converter (1) according to either of the preceding claims, wherein the coupling device (25) is designed as a transformer (26).

4. DC-to-DC converter (1) according to Claim 3, wherein the transformer (26) has a primary winding (261) which is connected to the first AC voltage terminal (161) of the first partial converter (2) and a secondary winding (262) which is connected to the first AC voltage terminal (241) of the second partial converter (3).

5. DC-to-DC converter (1) according to Claim 4, wherein the transformer (26) has a tertiary winding (263) for connecting the DC-to-DC converter (1) to an AC voltage network.

6. DC-to-DC converter (1) according to Claim 1, wherein the submodules (17) of the partial converters (2, 3) are in the form of full-bridge circuits (108) or half-bridge circuits (101).

7. System (40) for transmitting electric power, having
- a voltage converter (41) which is able to be connected to a first DC transmission line and/or to a first AC voltage network on the primary side and to a second DC transmission line (55) on the secondary side, and
- a unidirectional rectifier (59) which is able to be connected to the second DC transmission line (55) on the DC voltage side and to a second AC voltage network (71) on the AC voltage side,
**characterized in that**
the voltage converter is a DC-to-DC converter (1) according to Claim 1.

8. System (40) according to Claim 7, wherein the rectifier is arranged at sea and the DC-to-DC converter (1) is arranged on land.

9. System (40) according to either of Claims 7 and 8, wherein the unidirectional rectifier (59) is a diode rectifier.

## Revendications

1. Convertisseur (1) de tension continue, comprenant
- un premier sous-onduleur (2), qui a au moins une première phase (4a) d'onduleur, la première phase (4a) d'onduleur du premier sous-onduleur (2) comprenant une première branche (14) de phase et une deuxième branche (15) de phase, dans lequel
- la première branche (14) de phase du premier sous-onduleur (2) s'étend entre un premier pôle (5) de tension continue du côté primaire et une première borne (161) de tension alternative du premier sous-onduleur (2), et
- la deuxième branche (15) de phase du premier sous-onduleur (2) s'étend entre la première borne (161) de tension alternative du premier sous-onduleur et un premier pôle (6) de tension continue du côté secondaire, et
- un deuxième sous-onduleur (3), qui a au moins une première phase (9a) d'onduleur, la première phase (9a) d'onduleur du deuxième sous-onduleur (3) comprenant une première branche (20) de phase et une deuxième branche (21) de phase, dans lequel
- la première branche (20) de phase du deuxième sous-onduleur (3) s'étend entre le premier pôle (10) de tension continue du côté secondaire et une première borne (241) de tension alternative du deuxième sous-onduleur (3), et
- la deuxième branche (21) de phase du deuxième sous-onduleur (3) s'étend entre la première borne (241) de tension alternative du deuxième sous-onduleur (3) et un deuxième pôle (6) de tension continue du côté secondaire, dans lequel
les deux sous-onduleurs (2, 3) sont montés entre eux en série et constituent au moins une partie d'un circuit (4) série d'onduleur, qui s'étend entre le premier et un deuxième pôle (5, 6) de tension continue du côté primaire, dans lequel les branches (4a, 9a) de phase des sous-onduleurs (2, 3) ont chacune un circuit série de sous-modules (17) bipolaires, qui comprennent chacun au moins deux interrupteurs (102, 104) à semi-conducteur de puissance et un accumulateur (106) d'énergie et la première borne (161) de tension alternative du premier sous-onduleur et la première borne (241) de tension alternative du deuxième sous-onduleur sont reliées entre elles par un dispositif (25) de couplage, de manière à rendre possible un échange de puissance électrique entre le premier et le deuxième sous-onduleur,
dans lequel
les sous-onduleurs (2, 3) sont conçus pour mettre à disposition une tension (UDC1) de sortie constante du côté primaire, pour une tension (DC2) de sortie variable du côté secondaire, le nombre des sous-modules (17) dans la première et la deuxième branches (14, 15) de phase du premier sous-onduleur (2) et le nombre des sous-modules (17) dans la première et la deuxième branches (20, 21) de phase du deuxième sous-onduleur (3) étant tels que la tension (UDC1) de sortie constante du côté primaire peut être mise à disposition indépendamment de la tension (UDC2) de sortie du côté secondaire,
**caractérisé en ce que**
le nombre des sous-modules (17) du premier et du deuxième sous-onduleurs (2, 3) peut être modifié au moyen d'une unité (81 à 83) de commutation d'abaissement en fonction de la tension de sortie secondaire.

2. Convertisseur (1) de tension continue suivant l'une des revendications précédentes, dans lequel le dispositif (25) de couplage est conçu pour connecter le convertisseur (1) de tension continue à un réseau de tension alternative.

3. Convertisseur (1) de tension continue suivant l'une des revendications précédentes, dans lequel le dispositif (25) de couplage est constitué sous la forme d'un transformateur (26).

4. Convertisseur (1) de tension continue suivant la revendication 3, dans lequel le transformateur (26) a un enroulement (261) primaire, qui est relié à la première borne (161) de tension alternative du premier sous-onduleur (2), et un enroulement (262) secondaire, qui est relié à la première borne (241) de tension alternative du deuxième sous-onduleur (3).

5. Convertisseur (1) de tension continue suivant la revendication 4, dans lequel le transformateur (26) a un enroulement (263) tertiaire de connexion du convertisseur (1) de tension continue à un réseau de tension alternative.

6. Convertisseur (1) de tension continue suivant la revendication 1, dans lequel les sous-modules (17) des sous-onduleurs (2, 3) sont réalisés sous la forme de circuits (108) à pont complet ou de circuits (101) à demi-pont.

7. Installation (40) de transport de puissance électrique, comprenant
- un convertisseur (41) de tension, qui peut être relié, du côté primaire, à une première ligne de transport de courant continu et/ou à un premier réseau de tension alternative et, du côté secondaire, à une deuxième ligne (55) de transport de courant continu, et
- un redresseur (59) unidirectionnel, qui peut être relié, du côté de la tension continue, à la deuxième ligne (55) de transport de courant continu et, du côté de la tension alternative, à un deuxième réseau (71) de tension alternative,
**caractérisée en ce que**
le convertisseur de tension est un convertisseur (1) de tension continue suivant la revendication 1.

8. Installation (40) suivant la revendication 7, dans lequel le redresseur est en mer et le convertisseur (1) de tension continue est sur la terre ferme.

9. Installation (40) suivant l'une des revendications 7 ou 8, dans lequel le redresseur (59) unidirectionnel est un redresseur à diode.
